(19) Europäisches Patentamt
European Patent Office
Office européen des brevets

(11) Veröffentlichungsnummer: **0 104 378**
**B1**

# (12) EUROPÄISCHE PATENTSCHRIFT

(45) Veröffentlichungstag der Patentschrift: **15.07.87**

(51) Int. Cl.[4]: **G 11 B 5/70**, G 11 B 5/84

(21) Anmeldenummer: **83107788.8**

(22) Anmeldetag: **08.08.83**

(54) **Verfahren zur Herstellung von magnetischen Aufzeichnungsträgern.**

(30) Priorität: **28.08.82 DE 3232117**

(43) Veröffentlichungstag der Anmeldung: **04.04.84 Patentblatt 84/14**

(45) Bekanntmachung des Hinweises auf die Patenterteilung: **15.07.87 Patentblatt 87/29**

(84) Benannte Vertragsstaaten: **DE FR GB NL**

(56) Entgegenhaltungen:
**EP - A - 0 114 340**
**US - A - 3 592 687**
**US - A - 4 272 615**

(73) Patentinhaber: **BASF Aktiengesellschaft, Carl-Bosch-Strasse 38, D-6700 Ludwigshafen (DE)**

(72) Erfinder: **Kohl, Albert, Wiesenstrasse 3, D-6714 Weisenheim (DE)**
Erfinder: **Schneider, Norbert, Madenburgstrasse 57, D-6701 Altrip (DE)**
Erfinder: **Ley, Gregor, Dr., In den Trankstuecken, D-6719 Wattenheim (DE)**
Erfinder: **Balz, Werner, Dr., Kropsburgstrasse 44, D-6703 Limburgerhof (DE)**
Erfinder: **Melzer, Milena, Kirchenstrasse 116, D-6700 Ludwighafen (DE)**
Erfinder: **Jakusch, Helmut, Dr., Lorscher Ring 6c, D-6710 Frankenthal (DE)**

**EP 0 104 378 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von insbesondere für die Anwendung als Audio-, Video- oder Computerbänder geeigneten magnetischen Aufzeichnungsträgern durch Herstellen einer Dispersion von feinteiligem anisotropen magnetischen Material und üblichen Zusatzstoffen in einer Lösung eines Polymerbindemittels in einem organischen Lösungsmittel oder einer wässrigen Dispersion eines Polymerbindemittels, schichtförmiges Auftragen der Dispersion auf ein nicht magnetisierbares Trägermaterial, anschliessendes Ausrichten des anisotropen magnetischen Materials in einem Magnetfeld und Trocknen der aufgebrachten Schicht.

An Magnetschichten, die in modernen Audio- und Videoaufzeichnungs- und Wiedergabegeräten verwendet werden, werden Anforderungen in mehrfacher Hinsicht gestellt. Neben hervorragenden mechanischen Eigenschaften im Hinblick auf Flexibilität, Elastizität, Reiss- und Abriebfestigkeit, wird vor allem bei den Aufzeichnungs- und Wiedergabeeigenschaften, besonders für die Anwendung von Kassettentonbändern, Spulentonbändern und Videobändern eine stetige Verbesserung gefordert. Um dieses Ziel zu erreichen ist es erforderlich, ausser der Verwendung besonders geeigneter Magnetpigmente, wie Chromdioxid, cobaltdotierten Eisenoxiden und ferromagnetischen Metallteilchen, die in der Magnetschicht insgesamt enthaltenen Materialien so auszuwählen, dass die Magnetschichten eine besonders hohe remanente Magnetisierung in der Aufzeichnungsrichtung und eine ausgeprägt glatte Oberfläche aufweisen. Solche Magnetschichten müssen zwar einen hohen Anteil an magnetisierbarem Material in der Magnetschicht besitzen, aber die magnetisierbaren nadelförmigen Teilchen müssen sich in der Magnetschicht auch sehr stark entlang der vorgesehenen Aufzeichnungsrichtung orientieren lassen. Gerade die Verbesserung der genannten Eigenschaften, wie Oberflächenrauhigkeit, Remanenz und Ausrichtungsgrad lassen sich bei ein und demselben magnetischen Material im hohen Masse auch von den zur Herstellung der Magnetschicht verwendeten Bindemitteln und Zusatzstoffen beeinflussen. Von den Zusatzstoffen sind es in erster Linie die sogenannten Dispergiermittel, welche durch die Verbesserung der Dispergierbarkeit sowohl Verdichtung wie auch Ausrichtbarkeit der Magnetteilchen beeinflussen.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Jede Unebenheit führt zu einem Abstandseffekt zwischen Bandoberfläche und Kopfspalt und damit zu Signalverlusten bei hohen Frequenzen. Es ist Stand der Technik, magnetische Aufzeichnungsträger nach dem Beschichtungsvorgang durch Hindurchführen durch beheizte, unter Druck stehenden Walzen zu glätten. Der dabei erreichbare Glättungsgrad hängt jedoch weitgehend von der ursprünglichen Glätte der getrockneten Schicht nach dem Giessvorgang ab. Ursprünglich sehr rauhe Schichten können bei diesem Glättungsvorgang nicht so glatt werden wie Schichten, die bereits vor dem Glättungsvorgang eine geringe Rauhigkeit aufweisen.

Aus diesem Grund ist schon mehrfach vorgeschlagen worden, bereits den flüssigen Magnetschichtmischungen zu Beginn des Dispergiervorganges Dispergiermittel zur leichteren Verteilung des Magnetpigmentes in der Lackphase zuzusetzen. Hierfür werden in erster Linie oberflächenaktive Substanzen eingesetzt, deren Molekülstrukturen einen hydrophilen und einen hydrophoben Rest aufweisen und deren wirksame Struktur anionischen, kationischen, amphoteren oder nichtionischen Charakter besitzt. Diese Dispergiermittel erfordern eine sehr sorgfältige Abstimmung der angewandten Menge auf die Gesamtrezeptur, da es unter ungünstigen äusseren Bedingungen sehr leicht vorkommen kann, dass Überschüsse dieser Substanzen an die Oberfläche des Magnetogrammträgers austreten und dort ablagerungen und Verschmutzungen der bandführenden Geräteteile verursachen, was äusserst unerwünscht ist. Bei den meisten Dispergiermitteln ist des weiteren festzustellen, dass bei Erreichen einer gewissen Konzentration, die einer Sättigungsbelegung der aktiven Zentren der Magnetpigmentoberfläche entspricht, eine weitere Verbesserung der Dispergierbarkeit und damit der erreichbaren Verdichtung und Ausrichtbarkeit der magnetischen Materialien nicht festgestellt werden kann.

Der Erfindung lag daher als Aufgabe zugrunde, ein Verfahren zur Herstellung magnetischer Aufzeichnungsträger bereitzustellen, die sich durch eine besonders glatte Oberfläche der Magnetschicht und vor allem durch eine erhöhte Pakkungsdichte der Teilchen in der Magnetschicht bei einer gleichzeitigen Abhebung der magnetischen Vorzugsrichtung und damit der remanenten Magnetisierung in der vorgesehenen Aufzeichnungsrichtung auszeichnen. Auf Grund dieser angestrebten Verbesserungen würden sich solche Aufzeichnungsträger durch eine vorteilhaftere Aufzeichnungs- und Wiedergabequalität insbesondere bei hohen Frequenzen auszeichnen.

Es wurde nun gefunden, dass sich magnetische Aufzeichnungsträger durch Herstellen einer Dispersion von feinteiligem anisotropem magnetischen Material und üblichen Zusatzstoffen in einer Lösung eines Polymerbindemittels in einem organischen Lösungsmittel oder einer wässrigen Dispersion eines Polymerbindemittels, schichtförmiges Auftragen der Dispersion auf ein nichtmagnetisierbares Trägermaterial, anschliessendes Ausrichten des anisotropen magnetischen Materials mittels eines Magnetfeldes und Trocknen der aufgebrachten Schicht mit den geforderten Eigenschaften erhalten lassen, wenn als Dispergiermittel ein Copolymerisat zugesetzt wird, das aus

(a) 80 bis 2 Gew.% einer ethylenisch ungesättigten $C_3$- bis $C_5$-Carbonsäure, Acrylamidodimethylpropansulfonsäure, Vinylsulfonsäure, Vinylphosphorsäure oder Mischungen der genannten Monomeren und

(b) 20 bis 98 Gew.% einer polymerisierbaren ethylenisch ungesättigten Verbindung der Formel

$$R^1{-}O{-}(CH_2{-}CH_2{-}O)_n{-}(CH_2{-}\overset{\overset{CH_3}{|}}{C}H{-}O)_m{-}CO{-}\overset{\overset{R^2}{|}}{C}{=}CH_2 \quad (I),$$

in der $R^1$ = eine Alkylgruppe mit 1 bis 20 C-Atomen oder eine gegebenenfalls $C_1$- bis $C_{12}$-alkylsubstituierte Phenylgruppe, $R^2$ = H oder $-CH_3$, n = 2 bis 100 und m = 0 bis 50 bedeuten, als charakteristischen Monomeren aufgebaut ist.

In einer vorteilhaften Ausgestaltung des erfindungsgemässen Verfahrens können die angegebenen Copolymerisate zusätzlich

(c) bis zu 50 Gew.% mindestens eines anderen ethylenisch ungesättigten mit (a) und (b) copolymerisierbaren Monomeren einpolymerisiert enthalten.

Diese Copolymere sind bekannt, ebenso ihre Herstellung (DE-OS 2 758 122).

Diese nach dem erfindungsgemässen Verfahren als Dispergierhilfsmittel eingesetzen Copolymeren werden der zu dispergierenden Mischung in einer Menge von 0,5 bis 5, vorzugsweise 1 bis 3 Gewichtsprozent, bezogen auf die Menge an magnetischem Material, zugegeben. Werden zum Aufbau der Magnetschicht weitere an sich übliche Zusatzstoffe benutzt, die neben anderen Effekten, wie Verbesserung der Gleiteigenschaften oder des Verlaufs, auch die Dispergierung unterstützen, so bleibt die vorteilhafte Wirkung der Copolymeren auch dann erhalten. Die verwendete Menge sollte jedoch keinesfalls unter 0,5 Gewichtsprozent angesetzt werden.

Die Zusammensetzung und Herstellung der Dispersion der magnetischen Materialien im gelösten oder dispersen Polymerbindemittel entspricht den an sich üblichen Verfahren.

Als magnetische Materialien werden bevorzugt feinteiliges stäbchenförmiges Gamma-Eisen(III)oxid mit einer durchschnittlichen Teilchengrösse von 0,1 bis 2 µm, und insbesondere von 0,1 bis 0,9 µm oder stäbchenförmiges Chromdioxid der gleichen Teilchenstruktur wie beim Eisenoxid angegeben, verwendet. Weitere geeignete Materialien sind Gamma-Eisen(III)oxid mit Dotierungen von Schwermetallen, insbesondere von Kobalt sowie feinteilige Metallegierungen von Eisen, Kobalt und/oder Nickel.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomeres, Mischungen von Polyisocyanaten und höhermolekularen Polyhydroxylverbindungen oder Vinylchloridpolymerisate mit über 60% an Vinylchlorid-Molekülbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl-(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Bevorzugte Bindemittel sind Polyvinylformal-Binder, Polyurethanelastomer-Abmischungen der genannten Art, vor allem Mischungen mit Polyvinylformalen. Als Polyurethanelastomer-Binder werden handelsübliche elastomere Polyesterurethane aus Adipinsäure, 1,4-Butandiol und 4,4'-Diisocyanatdiphenylmethan bevorzugt angewandt.

Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminoalkohols und gegebenenfalls eines Triols mit einem Diisocyanat erhalten werden.

Magnetdispersionen, die sich besonders für die Herstellung von starren magnetischen Aufzeichnungsplatten eignen, enthalten bevorzugte Bindemittel wie Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z.B. Vinylchlorid- oder Vinylidenchlorid-Copolymere oder hitzehärtbare Acrylat- oder Methacrylate-Copolymere.

In gleicher Weise lassen sich als Bindemittel auch wässrige Dispersionen organischer Polymere verwenden. Besonders geeignet sind hierfür Polyurethanionomere, wie sie z.B. in den DE-OSen 2 920 334 und 3 005 009 beschrieben sind.

Den Dispersionen können weitere Zusatzstoffe zur Herstellung der Magnetschichten, beispielsweise geringe Monocarbonsäureanteile, Gemische oder Ester derselben sowie Füllstoffe, wie Russ, Graphit, Quarzmehl und/oder nicht magnetisierbares Pulver auf Silicatbasis und Mittel zur Verbesserung des Verlaufs, wie geringe Mengen Siliconöl, zugesetzt werden. Diese Zusätze sollen zweckmässigerweise insgesamt 12 Gewichtsprozent, bevorzugt 8 Gewichtsprozent, bezogen auf das Trockengewicht der Magnetschicht, nicht überschreiten.

Die Herstellung der Magnetschichten erfolgt in

bekannter Weise. Hierzu wird das magnetische Material mit dem verwendeten Bindemittel und ausreichend Lösungsmittel in einer Dispergiermaschine, z.B. einer Topfkugelmühle oder einer Rührwerkskugelmühle, unter Zusatz des Copolymeren und gegebenenfalls der weiteren Zusatzstoffe dispergiert. Zur Einstellung des zweckmässigen Bindemittel-Pigment-Verhältnisses können diese der Mischung entweder in festem Zustand oder in Form von 20- bis 60%igen Lösungen bzw. 30- bis 60%igen Dispersionen zugegeben werden. Es hat sich als zweckmässig erwiesen, die Dispergierung so lange fortzuführen, bis eine extreme feine Verteilung des magnetischen Materials erreicht ist, was 1 bis 3 Tage erfordern kann. Durch anschliessendes wiederholtes Filtrieren erhält man eine völlig homogene Magnetdispersion.

Die Magnetdispersion wird nun mit Hilfe üblicher Beschichtungsmaschinen, z.B. mittels eines Linealgiessers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmässigerweise bei Temperaturen von 50 bis 90°C während 2 bis 5 Minuten geschieht, werden die anisotropen Magnetteilchen durch die Einwirkung eines Magnetfeldes entlang der vorgesehenen Aufzeichnungsrichtung orientiert. Anschliessend können die Magnetschichten auf üblichen Maschinen durch Hindurchführen zwischen geheizten und polierten Walzen, gegebenenfalls bei Anwendung von Druck und Temperaturen von 50 bis 100°C, vorzugsweise 60 bis 80°C, geglättet und verdichtet werden. Die Dicke der Magnetschicht beträgt im allgemeinen 3 bis 20 µm, vorzugsweise 6 bis 15 µm.

Die erfindungsgemäss hergestellten magnetischen Aufzeichnungsträger zeichnen sich durch verbesserte Remanenz und verbesserten Ausrichtungsgrad der Magnetteilchen, sowie durch eine geringere Rauhigkeit der Oberfläche aus. Dadurch ergibt sich eine Anhebung des Wiedergabepegels und der Aussteuerbarkeit sowohl bei niederen als auch bei hohen Frequenzen.

Beispiel 1

In einem Polymerisationsgefäss, das mit einem Rührer, Rückflusskühler, Thermometer, Stickstoffeinleitung und -auslass versehen war und in ein Wasserbad eintauchte, wurden 140 Teile einer Verbindung der Formel

$$CH_3\text{-}O\text{-}(CH_2\text{-}CH_2\text{-}O)_{11}\text{-}CO\text{-}CH{=}CH_2 \quad \text{(II)},$$

280 Teile Methacrylsäure, 630 Teile Isopropanol und 630 Teile Wasser vorgelegt. Die Mischung wurde gerührt und auf eine Temperatur von etwa 50°C erwärmt, wobei eine klare Lösung erhalten wurde. Dann wurden 14 Teile Azobisisobutyronitril zugefügt und die Mischung 3 Stunden lang zum Sieden erhitzt. Nach dem Abkühlen wurde eine klare gelbliche Polymerisatlösung mit einem Feststoffgehalt von 25% erhalten. Das wasserlösliche Copolymerisat hatte einen K-Wert von 40,4. Die K-Werte wurden nach H. Fikentscher, Cellulosechemie 13, 58–65 und 71–74 (1932), in 3%igen Dimethylformamidlösungen bei 20°C bestimmt; dabei bedeutet $K = k \cdot 10^3$.

Beispiel 2

In einer druckfesten Polymerisationsapparatur, wie in Beispiel 1 beschrieben, mit zwei mit Rührern versehenen druckfesten Zulaufgefässen wurde folgender Ansatz gemacht:

Zulauf I
80 Teile Tetrahydrofuran
19,6 Teile des Monomeren der Formel (III)
9,8 Teile Methacrylsäure

Zulauf II
0,98 Teile Teile Azobisisobutyronitril
8,2 Teile Tetrahydrofuran.

Nach Abpressen mit $N_2$ wurden 20 Gew.% von Zulauf I im Polymerisationskessel vorgelegt und auf 50°C aufgeheizt. Bei dieser Temperatur wurden 20 Gew.% des Zulaufs II zugegeben und weiter auf 80°C erhitzt. 15 Minuten nach Erreichen dieser Temperatur wurde damit begonnen, den Rest der Zuläufe I und II nebeneinander kontinuierlich in 1 Stunde zuzufahren. Nach Beendigung der Zuläufe wurde noch weitere 1,5 Stunden bei der Temperatur von 80°C gehalten, danach abgekühlt und entspannt. Die resultierende gelbliche Polymerisatlösung hatte einen Feststoffgehalt von 26,7%, das Polymerisat einen K-Wert von 16,8.

Beispiel 3

In einer Stahlkugelmühle von 6000 Volumenteilen Inhalt und einer Kugelfüllung von 8000 g wurden 1000 g eines magnetischen Eisenoxids mit einer Koerzitivfeldstärke von 26 kA/m und einer spezifischen Oberfläche von 20 m²/g, 16 g des Dispergiermittels gemäss Beispiel 2, 200 g eines mit einem Polyisocyanat vernetzten niedermolekularen Polyurethanprepolymer als Bindemittel, 1 g Siliconöl, 1 g Butylstearat, 2 g Isostearinsäure, 2 g Hydrochinon und 2000 g eines Lösungsmittelgemisches zu gleichen Teilen aus Tetrahydrofuran und Dioxan 72 Stunden lang dispergiert.

Mit der so erhaltenen Magnetpigmentdispersion wurde nach dem Filtrieren mit einem Linealgiesser eine Polyethylenterephthalatfolie von 12 µm Dicke beschichtet.

Vor der Trocknung bei 70 bis 90°C wurde die beschichtete Folie zur Ausrichtung der magnetischen Teilchen in der Schicht durch ein homogenes Magnetfeld geführt und danach erfolgte noch eine Glättung und Verdichtung der Schicht durch Kalandrieren bei 70°C. Die Dicke der getrockneten Schicht betrug 4,7 µm. Die so beschichtete Folie wurde in Bändern von 3,81 mm

Breite geschnitten.

An der beschichteten Folie wurde die Oberflächenrauhigkeit als gemittelte Rauhtiefe $R_z$ gemäss DIN 4768, Blatt 1, sowohl an der kalandrierten wie auch an der nicht kalandrierten Schicht bestimmt. Die Reflexion der nicht kalandrierten Schicht wurde nach DIN 67 530 gemessen. Bei den Aufzeichnungseigenschaften wurden die elektroakustischen Werte gemäss DIN 45 401, 45 403 und 45 512 (Blatt 12) gegen das Bezugsband IEC 1 geprüft. Die Messergebnisse sind in Tabelle 1 angegeben.

Vergleichsversuch 1

Es wurde wie in Beispiel 3 beschrieben verfahren, jedoch wurde als Dispergierhilfsmittel ein handelsübliches Produkt auf der Basis eines Salzes aus langkettigen Polyaminamiden und einem hochmolekularen, sauren Ester eingesetzt. Die Ergebnisse sind in Tabelle 1 angegeben.

Beispiel 4

Anstelle des in Beispiel 3 eingesetzten niedermolekularen Polyurethanprepolymeren wurde ein Bindemittelgemisch, bestehend aus einem Copolymerisat aus 80% Vinylchlorid, 10% Dimethylmaleinat und 10% Diethylmaleinat und einem Polyurethanelastomeren, eingesetzt. Die Dispergierung erfolgte zweiphasig, wobei in der ersten Phase auf 100 Teile Eisenoxid 6,7 Teile des Bindemittelgemisches zusammen mit 6,4 Teilen des Dispergiermittels gemäss Beispiel 2, Siliconöl, Butylstearat, Isostearinsäure, Hydrochinon und 120 Teilen Lösungsmittel 60 Stunden dispergiert wurden. Danach wurden noch 19 Teile des Bindemittelgemisches und 130 Teile Lösungsmittel 5 Stunden eingearbeitet und 3,3 Teile Polyisocyanat unmittelbar vor der Beschichtung zugerührt. Die Verarbeitung der Magnetpigmentdispersion erfolgte wie in Beispiel 3 beschrieben. Die Ergebnisse sind in Tabelle 1 angegeben.

Vergleichsversuch 2

Es wurde Beispiel 4 wiederholt, jedoch wurde als Dispergierhilfsmittel das des Vergleichsversuches 1 eingesetzt. Da jedoch auch nach 80 Stunden Dispergierdauer die Rauhigkeit $R_z$ der Magnetschicht noch bei über 3,0 µm lag, konnten die elektroakustischen Werte in keiner Weise befriedigen.

Tabelle 1

| | | Beispiel 3 | Vergleichsversuch 1 | Beispiel 4 |
|---|---|---|---|---|
| Rauhigkeit $R_z$, unsatiniert | (µm) | 0,46 | 1,23 | 0,70 |
| Rauhigkeit $R_z$, satiniert | (µm) | 0,26 | 0,43 | 0,22 |
| Reflexion, unsatiniert | | 50 | 26 | 25 |
| Tiefenempfindlichkeit $E_T$ 315 Hz | (dB) | + 1,5 | + 1,0 | + 0,1 |
| Höhenempfindlichkeit $E_H$ 10 kHz | (dB) | + 1,3 | − 2,3 | + 1,1 |
| Tiefenaussteuerbarkeit $A_T$ 315 Hz | (dB) | + 1,3 | + 1,0 | + 0,6 |
| Höhenaussteuerbarkeit $A_H$ 10 kHz | (dB) | 0 | − 2,8 | + 0,4 |
| Magnetschichtdicke | (µm) | 4,7 | 4,6 | 4,9 |

Beispiel 5

In einer Stahlkugelmühle von 6000 Volumenteilen Inhalt und einer Kugelfüllung von 8000 g wurden 1200 g eines magnetischen Eisenoxids mit einer Koerzitivfeldstärke von 26 kA/m und einer spezifischen Oberfläche von 20 $m^2/g$, 96 g des Dispergierhilfsmittels gemäss Beispiel 1, 20 g 10%iger Ammoniaklösung, 12 g Zinkstearat und 12 g eines handelsüblichen Siliconöls zugesetzt und mit 840 g Wasser 24 Stunden dispergiert. In diesen Ansatz wurden anschliessend 750 g einer 40%igen Polyurethanionomerdispersion auf der Basis eines hydroxylgruppenhaltigen Polyesters, 4,4'-Diphenylmethandiisocyanat, Butandiol-1,4, Epikote-diacrylat, Mercaptoessigsäure und Triethylamin eingearbeitet. Die Verarbeitung der Magnetpigmentdispersion erfolgte wie bei Beispiel 3 beschrieben. Die Ergebnisse sind in Tabelle 2 angegeben.

Vergleichsversuch 3

Es wurde wie in Beispiel 5 beschrieben verfahren, jedoch wurden anstelle des Dispergierhilfsmittels gemäss Beispiel 1 80 g einer 30%igen Lösung eines Ammoniumpolyacrylats eingesetzt, ausserdem musste 72 Stunden lang dispergiert werden. Die Ergebnisse sind in Tabelle 2 angegeben.

Tabelle 2

| | | Beispiel 5 | Vergleichsversuch 3 |
|---|---|---|---|
| Dispergierdauer | (Stdn.) | 24 | 72 |
| Rauhigkeit $R_z$, unsatiniert | (µm) | 0,54 | 1,21 |
| Rauhigkeit $R_z$, satiniert | (µm) | 0,29 | 0,47 |
| Reflexion, unsatiniert | | 48 | 29 |
| Tiefenempfindlichkeit $E_T$ 315 Hz | (dB) | + 0,1 | 0 |
| Höhenempfindlichkeit $E_H$ 10 kHz | (dB) | + 1,3 | − 3,5 |
| Tiefenaussteuerbarkeit $A_T$ 315 Hz | (dB) | + 0,2 | − 0,1 |
| Höhenaussteuerbarkeit $A_H$ 10 kHz | (dB) | + 0,5 | − 3,5 |
| Magnetschichtdicke | (µm) | 4,5 | 4,7 |

## Patentansprüche

1. Verfahren zur Herstellung von magnetischen Aufzeichnungsträgern durch Herstellen einer Dispersion von feinteiligem anisotropen magnetischen Material und üblichen Zusatzstoffen in einer Lösung eines Polymerbindemittels in einem organischen Lösungsmittel oder einer wässrigen Dispersion eines Polymerbindemittels, schichtförmiges Auftragen der Dispersion auf ein nichtmagnetisierbares Trägermaterial, anschliessendes Ausrichten des anisotropen magnetischen Materials mittels eines Magnetfeldes und Trocknen der aufgebrachten Schicht, dadurch gekennzeichnet, dass als Dispergierhilfsmittel ein Copolymerisat zugesetzt wird, das aus

(a) 80 bis 2 Gew.% einer ethylenisch ungesättigten $C_3$- bis $C_5$-Carbonsäure, Acrylamidodimethylpropansulfonsäure, Vinylsulfonsäure, Vinylphosphorsäure oder Mischungen der genannten Monomeren und

(b) 20 bis 98 Gew.% einer polymerisierbaren ethylenisch ungesättigten Verbindung der Formel

$$R^1\text{-O-}(CH_2\text{-}CH_2\text{-}O)_w\text{-}(CH_2\text{-}\overset{CH_3}{\overset{|}{CH}}\text{-}O)_m\text{-CO-}\overset{R^2}{\overset{|}{C}}=CH_2 \qquad (I),$$

in der $R^1$ = eine Alkylgruppe mit 1 bis 20 C-Atomen oder eine gegebenenfalls $C_1$- bis $C_{12}$-alkylsubstituierte Phenylgruppe, $R^2$ = H oder $-CH_3$, n = 2 bis 100 und m = 0 bis 50 bedeuten, als charakteristischen Monomeren aufgebaut ist.

2. Verfahren zur Herstellung von magnetischen Aufzeichnungsträgern nach Anspruch 1, dadurch gekennzeichnet, dass die Copolymerisate zusätzlich

(c) bis zu 50 Gew.% mindestens eines anderen ethylenisch ungesättigten mit (a) und (b) copolymerisierbaren Monomeren einpolymerisiert enthalten.

## Claims

1. A process for the production of a magnetic recording medium by preparing a dispersion of finely divided anisotropic magnetic material and conventional additives in a solution of a polymeric binder in an organic solvent or an aqueous dispersion of a polymeric binder, applying the dispersion, in the form of a layer, to a non-magnetizable base, subsequently orienting the anisotropic magnetic material by means of a magnetic field and drying the applied layer, wherein the dispersant added is a copolymer which contains, as characteristic monomers,

(a) from 80 to 2% by weight of an ethylenically unsaturated $C_3$-$C_5$-carboxylic acid, acrylamidodimethylpropanesulfonic acid, vinylsulfonic acid, vinylphosphoric acid or a mixture of the said monomers, and

(b) from 20 to 98% by weight of a polymerizable ethylenically unsaturated compound of the formula

$$R^1\text{-O-}(CH_2\text{-}CH_2\text{-}(CH_2\text{-}O)_n\text{-}\overset{CH_3}{\overset{|}{CH}}\text{-}O)_m\text{-CO-}\overset{R^2}{\overset{|}{C}}=CH_2 \qquad (I),$$

where $R^1$ is alkyl of 1 to 20 carbon atoms or unsubstituted or $C_1$-$C_{12}$-alkyl-substituted phenyl, $R^2$ is H or $-CH_3$, n is 2 to 100, and m is 0 to 50.

2. A process for the production of a magnetic recording medium as claimed in claim 1, wherein the copolymer additionally contains, as copolymerized units,

(c) up to 50% by weight of at least one other ethylenically unsaturated monomer which is copolymerizable with (a) and (b).

## Revendications

1. Procédé de fabrication de supports d'enregistrement magnétique par préparation d'une dispersion de matière magnétique anisotrope finement divisée et d'additifs usuels dans une solution d'un liant polymère dans un solvant organique ou une dispersion aqueuse d'un liant polymère, application en couche de la dispersion sur un matériau support non magnétisable, puis alignement de la matière magnétique anisotrope au moyen d'un champ magnétique et séchage de la couche appliquée, caractérisé par le fait que l'on

ajoute, comme auxiliaire de dispersion, un copolymérisat qui est constitué, en tant que monomères caractéristiques, de

(a) 80 à 2% en poids d'un acide carboxylique en $C_3$ à $C_5$ insaturé éthyléniquement, acide acrylamidodiméthylpropane sulfonique, acide vinylsulfonique, acide vinylphosphorique ou de mélanges des monomères ci-dessus, et

(b) 20 à 98% en poids d'un composé polymérisable, insaturé éthyléniquement, de formule

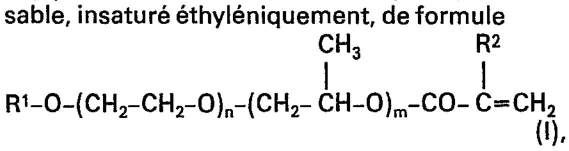

(I),

dans laquelle $R^1$ représente un groupe alkyle ayant 1 à 20 atomes C ou un groupe phényle éventuellement substitué par alkyle en $C_1$ à $C_{12}$, $R^2$ = H ou $-CH_3$, n = 2 à 100 et m = 0 à 50.

2. Procédé pour la préparation de supports d'enregistrement magnétique selon la revendication 1 caractérisé par le fait que les copolymérisats contiennent additionnellement, en polymérisation,

(c) jusqu'à 50% en poids d'au moins un autre monomère, copolymérisable avec (a) et (b), insaturé éthyléniquement.